# EUROPÄISCHE PATENTSCHRIFT

(11) **EP 1 324 067 B1**
(45) Veröffentlichungstag und Bekanntmachung des Hinweises auf die Patenterteilung: **07.01.2009**
(21) Anmeldenummer: 02026620.1
(22) Anmeldetag: 29.11.2002
(51) Int. Cl.: G01S 13/10, G01F 23/284

(54) **Verfahren und Schaltungsanordnung zum Messen der Entfernung eines Gegenstandes**
Method and circuit for measuring the distance of an object
Procédé et circuit pour la mesure de la distance d'un objet

(30) Priorität: 28.12.2001 DE 10164030
(43) Veröffentlichungstag der Anmeldung: 02.07.2003
(73) Patentinhaber: VEGA Grieshaber KG, 77709 Wolfach (DE)
(72) Erfinder: Körnle, Ralf, 77736 Zell am Hamersbach (DE); Greissbaum, Karl, 77796 Mühlenbach (DE)
(74) Vertreter: Patentanwälte Westphal, Mussgnug & Partner

(56) Entgegenhaltungen:
- EP-A- 0 955 527
- EP-A- 1 069 438
- EP-A- 1 235 059
- DE-A- 3 107 444
- KHORRAM S ET AL: "A CMOS LIMITING AMPLIFIER AND SIGNAL-STRENGTH INDICATOR" , 1995 SYMPOSIUM ON VLSI CIRCUITS. KYOTO, JUNE 8 - 10, 1995, SYMPOSIUM ON VLSI CIRCUITS, NEW YORK, IEEE, US, PAGE(S) 95-96 XP000557818 ISBN: 0-7803-2600-8 * das ganze Dokument *
- SKOLNIK M: "Radar Handbook" 1990 , MCGRAW-HILL, INC. , UNITED STATES XP002246148 * Seite 3.25 - Seite 3.32 *

## Beschreibung

Die Erfindung betrifft Verfahren und Schaltungsanordnungen zum Messen der Entfernung eines Gegenstandes von einer Sender-Empfängeranordnung eines Meßsignals, insbesondere, aber nicht notwendigerweise der Entfernung zwischen einem Sensor und der Oberfläche eines Füllgutes in einem Behälter.

Solche Verfahren und Anordnungen sind aus EP-A-1 069 438 bekannt.

Zur kontinuierlichen Füllstandsbestimmung in Behältern, die beispielsweise Flüssigkeiten oder Schüttgüter enthalten, werden oftmals Sensoren verwendet, die nach dem Radarprinzip die Laufzeit von Mikrowellen vom Sensor zur Füllgut-Oberfläche und zurück messen. Die Mikrowellen, die in einem Frequenzbereich zwischen etwa 1 und 100 GHz liegen können, werden meist als elektromagnetische Wellen über Antennen frei abgestrahlt, und das von der Oberfläche des Füllgutes zurückgeworfene Echo wird empfangen. Daneben sind Geräte bekannt, die die Wellen entlang eines Wellenleiters vom Sensor zum Füllgut und zurück leiten. Die Reflexion der Wellen an der Füllgutoberfläche beruht bei diesem zweiten Typ auf der Änderung der Ausbreitungsimpedanz des Wellenleiters für die Welle an der Füllgutoberfläche.

Zur Bestimmung der gesuchten Wellenlaufzeit vom Sensor zur zu erfassenden Oberfläche und zurück sind unterschiedliche Radarprinzipien bekannt. Die beiden hauptsächlich angewandten Verfahren sind zum einen das Impuls-Laufzeit-Verfahren (Puls-Radar-Verfahren) und zum anderen das frequenzmodulierte Dauerstrichverfahren (frequency-modulated continuous wave- (FMCW) - Radar-Verfahren).

Beim FMCW-Radar-Verfahren wird die Laufzeit auf indirektem Weg über die Aussendung eines frequenzmodulierten Signals und Differenzbildung zwischen gesendeter und empfangener Momentanfrequenz bestimmt.

Das Pulsradarverfahren bedient sich der Abstrahlung kurzer Mikrowellenimpulse, sog. bursts, und ermittelt die direkte Zeitdauer zwischen Aussendung und Empfang der Impulse. Aus dieser Zeitdauer ergibt sich die Entfernung zwischen Sensor und Füllgutoberfläche und damit die Behälter-Füllhöhe. Die zu messenden Zeitabstände sind bei üblichen Messentfernungen im Bereich bis zu einigen Metern äußerst kurz, weshalb bei Impuls-Radarsensoren das empfangene Echosignal zweckmäßigerweise durch ein Zeittransformationsverfahren zeitlich gedehnt wird. Ein solches Verfahren ist in DE 3 107 444 beschrieben. Es liefert ein zeitlich gedehntes Echosignal, das dem empfangenen hochfrequenten Empfangssignal entspricht, aber zeitlich beispielsweise um einen Faktor zwischen 10.000 und 100.000 langsamer abläuft. Aus einer Trägerschwingungsfrequenz des Mikrowellenimpulses von beispielsweise 5,8 GHz wird so eine Trägerschwingungsfrequenz des zeitgedehnten Echoimpulses zwischen beispielsweise 58 kHz und 580 kHz.

Der Zeitabstand zwischen gesendetem und empfangenem Impuls läßt sich innerhalb des zeitgedehnten Echosignals mit üblichen Schaltungsbausteinen und Verfahren zur Signalverarbeitung und anschließenden Zeitmessung ermitteln, die beispielsweise auch von Ultraschall-Füllstandssensoren bekannt sind.

Aus EP 955 527 ist es weiterhin bekannt, das zeitgedehnte Echosignal, oft auch als Zwischenfrequenzsignal (ZF-Signal) bezeichnet, zu demodulieren. Das dadurch entstandene Hüllkurvensignal wird abgetastet und in Digitalwerte gewandelt. Eine digitale Auswerteeinheit bestimmt nachfolgend die Maxima des Sendeimpulses und des von der zu erfassenden Oberfläche zurückgeworfenen Echoimpulses. Nachteilig an dieser Art der E-chosignalverarbeitung basierend auf der linearen Hüllkurve ist, daß wenn ein Sendeimpuls von mehreren Gegenständen reflektiert wird und das empfangene Echosignal sich somit aus einer Mehrzahl einzelner Echoimpulse zusammensetzt, bei großen Amplitudenunterschieden zwischen verschiedenen empfangenen Echoimpulsen nicht alle Echoimpulse gleichzeitig detektiert werden können. Wird die Systemverstärkung so eingestellt, daß Echoimpulse mit großer Amplitude optimal dargestellt werden, dann sind Echoimpulse mit kleiner Amplitude nicht mehr erkennbar. Umgekehrt werden bei Anpassung der Verstärkung an schwache Echoimpulse die starken Echoimpulse übersteuert. Dies erschwert erheblich die korrekte Auswertung der Echosignale, da von der Vielzahl von im empfangenen Echosignal enthaltenen Impulsen nur einer tatsächlich von der zu erfassenden Oberfläche kommt und a priori im allgemeinen nicht gesagt werden kann, welche Stärke dieser im Vergleich zu anderen Impulsen des Echos hat. Um alle möglicherweise relevanten Impulse eines Echosignals identifizieren zu können, kann es daher notwendig sein, nacheinander eine Mehrzahl von Echos mit unterschiedlichen Verstärkungen auszuwerten.

Zur Vermeidung dieses Nachteils ist z.B. aus M. Skolnik, Radar Handbook, zweite Auflage, McGraw-Hill, Seiten 3.25 ff. bekannt, anstatt der linearen Hüllkurve eine logarithmische Hüllkurve des ZF-Signals zu bilden. Dieses logarithmierte Signal kann dann z.B. eine Dynamik des Echosignals von über 80 dB darstellen, wodurch gleichzeitig sehr starke und sehr schwache Echoimpulse innerhalb eines ZF-Signals durch die Auswerteeinheit identifiziert und bearbeitet werden können. Damit ist es möglich, auch in Behältern, die aufgrund Ihrer Beschaffenheit zusätzlich zum Echoimpuls von der Füllgutoberfläche weitere störende Echoimpulse erzeugen, alle entstandenen Impulse gleichzeitig zu erfassen und den richtigen von diesen auszuwerten.

Zur Verbesserung der Meßgenauigkeit wird in DE 44 07 369 ein Verfahren nach dem Oberbegriff des Anspruchs 1 beschrieben, bei dem zusätzlich zur Zeitdifferenz zwischen dem Senden des Abtastsignals und dem Auffangen eines Echoimpulses auch die Phasendifferenz zwischen dem Abtastsignal und dem Echoimpuls gemessen und ausgewertet wird. Dazu wird in einem Signalverarbeitungspfad wie oben beschrieben die Hüllkurve des Echosignals erzeugt, um die Zeitdifferenz zu messen, während in einem parallelen Signalpfad das ZF-Signal verstärkt und bezüglich der relativen Phasenlage des gesendeten Abtastsignals und des empfangenen Echos ausgewertet wird. Auf diese Weise ist eine sehr hohe Meßgenauigkeit erreichbar, allerdings ist auch der hierfür erforderliche Aufwand innerhalb der Signalverarbeitungs-Elektronik erheblich. Der zusätzliche Signalverarbeitungspfad zur Phasenauswertung enthält beispielsweise einen Quadratur-Demodulator und anschließend daran mindestens einen Analog-Digitalwandler zur Abtastung des I-Q-Ausgangs des Quadratur-Demodulators.

Alternativ dazu wäre es zwar denkbar, das ZF-Signal mit Hilfe eines schnellen AD-Wandlers direkt abzutasten und die Quadratur-Demodulation und damit die Phasenauswertung rechnerisch anhand der digitalisierten Werte durchzuführen. Vom Schaltungsaufwand her betrachtet stellt dies jedoch kaum eine Erleichterung dar, denn aufgrund der hohen Amplitudendynamik dieses Signals muß es vor der AD-Wandlung über einstellbare Verstärker erst eingepegelt werden.

Eine andere Möglichkeit, die Phaseninformation aus den Echos des ZF-Signals zu extrahieren, ist die Verwendung eines Begrenzerverstärkers (limiter), wie in dem bereits zitierten Buch von Skolnik ab Seite 3.30 beschrieben. Die Flanken der annähernd rechteckförmigen Ausgangssignale des Begrenzerverstärkers markieren die Null-Durchgänge der Trägerschwingung der Echoimpulse. Sie können zur Triggerung von Timern verwendet werden, wodurch dann eine Bestimmung der Phasenlage dieser Echos möglich ist. Weil durch die Verwendung des Begrenzerverstärkers die Amplitudeninformation zugunsten der Phaseninformation verloren geht, ist auch hier die Bestimmung der Phaseninformation nur in einem zur Hüllkurvenverarbeitung parallelen, zusätzlichen Signalpfad möglich, was wie schon erwähnt, zusätzlichen Schaltungsaufwand bedeutet.

Zusammengefaßt läßt sich feststellen, daß bei allen bisher bekannten Verfahren zur Signalverarbeitung eines Echosignals zum Messen der Entfernung eines Gegenstandes, insbesondere eines Füllstandspegels, entweder durch Beschränkung auf die Auswertung der Hüllkurve auf einen Zuwachs an Meßgenauigkeit verzichtet wird, der durch Auswertung der Phase erreichbar wäre, oder durch Bereitstellung eines umfangreichen parallelen Signalverarbeitungspfades zur Extrahierung der Phaseninformation der schaltungstechnische Aufwand im Vergleich zu einer "einfachen" Laufzeitauswertung deutlich steigt.

Die Aufgabe der Erfindung ist daher, Verfahren und Schaltungsanordnungen für eine bessere Signalverarbeitung beim Messen der Entfernung eines Gegenstandes mit Hilfe eines impulsförmigen Abtastsignals anzugeben, die mit möglichst geringem Schaltungsaufwand sowohl die schnelle Erkennung von Echoimpulsen mit stark unterschiedlichen Intensitäten als auch die Extrahierung der Phaseninformation verschiedener Echoimpulse aus dem Echosignal ermöglicht.

Die Aufgabe wird zum einen gelöst durch das Verfahren mit den Merkmalen des Anspruchs 1. Durch Logarithmieren und Tiefpaßfilterung des aufgefangenen Echos wird der Dynamikumfang, in dem ein aufgefangener Echoimpuls identifizierbar und auswertbar ist, erheblich erweitert. Indem der Schritt des Messens einer Phasendifferenz zwischen gesendetem impulsförmigem Signal und Echoimpuls genauso wie der des Messens der Zeitdifferenz zwischen diesen Impulsen am logarithmierten allerdings nicht tiefpaßgefilterten, Echo durchgeführt wird, ist es möglich, die Signalverarbeitung für die Messung der Phasendifferenz und der Zeitdifferenz weitgehend einheitlich zu halten und vorhandene Schaltungskomponenten für beide Messungen zu nutzen.

Da das logarithmierte Echo keine negativen Werte annehmen kann, können zum Messen der Phasendifferenz keine Nulldurchgänge des Echos mehr herangezogen werden. Statt dessen werden die Minima des logarithmierten Echos erfaßt, vorzugsweise durch Differenzieren.

Die Logarithmierung wird vorzugsweise mit Hilfe einer Kette von sättigbaren Verstärkern durchgeführt, deren Ausgangssignale gleichgerichtet und addiert werden, um das logarithmierte Echosignal zu bilden.

Eine Weiterbildung der Erfindung erfordert die Verwendung einer Logarithmierschaltung mit einer Kette von sättigbaren Verstärkern, bei der die Ausgangssignale der einzelnen sättigbaren Verstärker einerseits zur Gewinnung des Logarithmus gleichgerichtet und addiert werden und andererseits einem Eingang eines nachfolgenden Verstärkers der Kette als Eingangssignal zugeführt werden. Der Ausgang des letzten Verstärkers dieser Kette liefert ein Signal, welches das durch Sättigung in seiner Amplitude begrenzte, um das Produkt der Verstärkungen aller Verstärker der Kette verstärkte Echosignal darstellt. Aufgrund der hohen Verstärkung außerhalb des Sättigungsbereichs enthält dieses Ausgangssignal nahezu rechteckigförmige Schwingungszüge so daß deren Nulldurchgangspunkte ein exaktes Abbild der Nulldurchgänge des aufgefangenen Echos sind.

Dem erfindungsgemäßen Verfahren, das gemäß nachfolgender Beschreibung bevorzugt in zwei Ausgestaltungen angewandt werden kann, ist folgendes gemeinsam: Extrahieren eines Zeitdifferenzsignals zwischen einem Referenzpuls und einem Echopuls einer Puls-Laufzeitmessung sowie Korrektur der ermittelten Zeitdifferenz durch Phasendifferenzmessung, wobei Zeitdifferenzmessung und Phasendifferenzmessung möglichst viele Schaltungsteile gemeinsam nutzen.

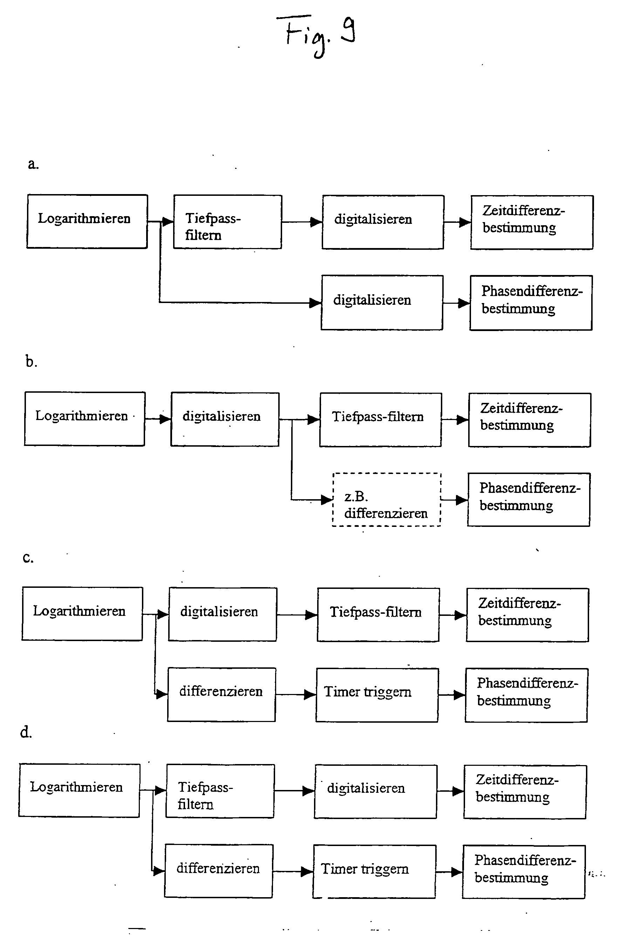

Einer ersten Ausgestaltung zufolge wird das logarithmierte Echosignal gemäß der Darstellung in Fig. 9 verarbeitet. Dabei nimmt die Relevanz für die praktische Realisierung gemäß den Blockschaltbildern von a nach d zu.

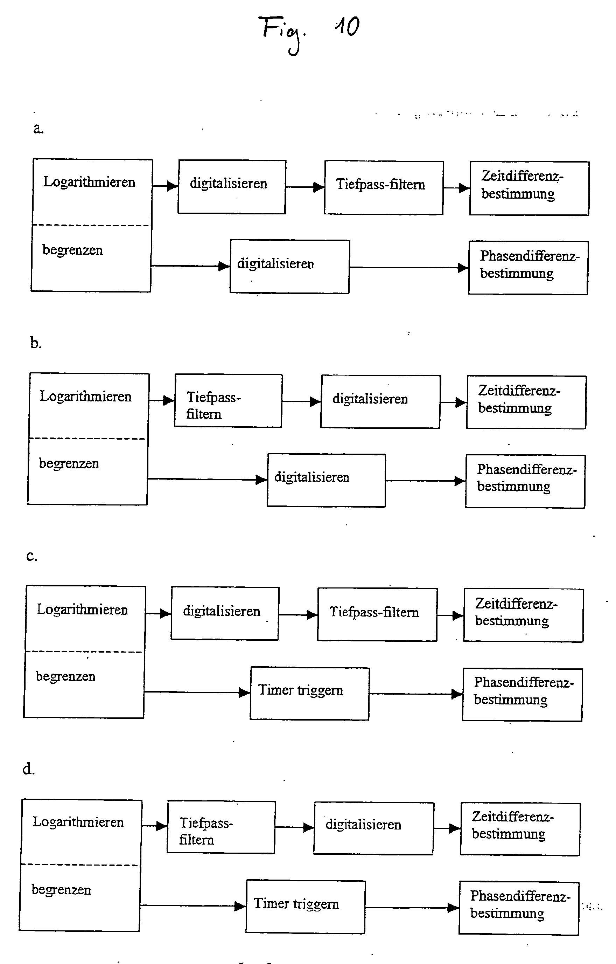

Alternativ kann jedoch als Ausgangspunkt der Zeitdifferenzmessung das logarithmierte Echosignal herangezogen werden, während die Phasendifferenzmessung auf dem ebenfalls bei der Logarithmierung anfallenden begrenzten Echosignal aufbaut. Ausgestaltungen dieser Alternative sind in Fig. 10 gezeigt, wobei wiederum die Relevanz für praktische Realisierungen von a nach d zunimmt.

Weitere Merkmale und Vorteile der Erfindung ergeben sich aus der nachfolgenden Beschreibung von Ausführungsbeispielen mit Bezug auf die beigefügten Figuren. Es zeigen:
- Fig. 1: ein Blockdiagramm einer Füllstandsmessvorrichtung mit einer ersten Ausgestaltung einer erfindungsgemäßen Schaltungsanordnung;
- Figs. 2 und 3: Füllstandsmeßvorrichtungen mit abgewandelten Schaltungsanordnungen gemäß der Erfindung;
- Fig. 4: ein Blockdiagramm einer Logarithmierschaltung,
- Fig. 5: ein Blockdiagramm einer Füllstandsmeßvorrichtung, die die Logarithmierschaltung aus Fig. 4 verwendet.
- Fig. 6: in Teil A den zeitlichen Verlauf eines Echosignals mit mehreren Impulsen, in Teil B das logarithmierte Echosignal und in Teil C die Hüllkurve des logarithmierten Echosignals;
- Fig. 7: in Teil A einen Impuls des Echosignals in vergrößertem Zeitmaßstab, in Teil B den logarithmierten Impuls und in Teil C die zweite zeitliche Ableitung des logarithmierten Impulses;
- Fig. 8: in Teil A das Echosignal von Fig. 6A, in Teil B das aus diesem Echosignal von der Schaltung der Fig. 4 erzeugte logarithmierte und anschließend tiefpaßgefilterte Ausgangssignal und in Teil C das aus diesem Echosignal resultierende Ausgangssignal des letzten Verstärkers.
- Fig. 9 u.10: Blockschaltbilder zu dem erfindungsgemäßen Verfahren

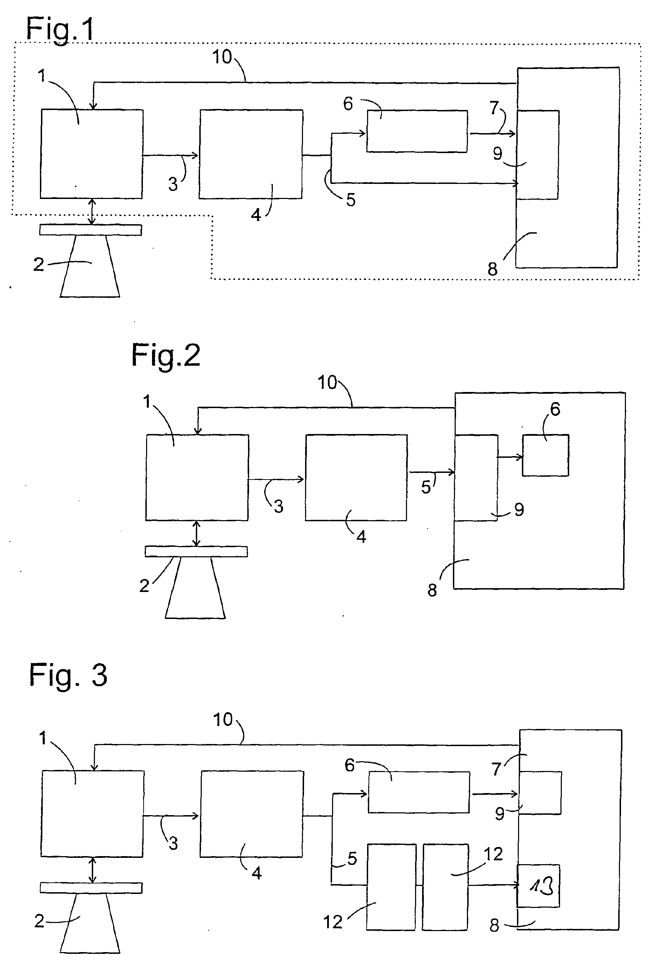

In Fig. 1 ist das vereinfachte Blockschaltbild eines Radar-Füllstandssensors dargestellt. Er umfaßt eine Sende-/Empfangsschaltung 1, in der periodisch kurze Mikrowellenimpulse erzeugt werden, die über ein Wandlerelement 2 in Richtung einer zu erfassenden Füllgutoberfläche abgestrahlt werden. Das Wandlerelement 2 kann eine in den freien Raum abstrahlende Antenne, wie z.B. eine Hornantenne, Planarantenne oder dielektrische Antenne sein. Die Mikrowellenimpulse können aber auch in einen (nicht dargestellten) Wellenleiter eingespeist werden, der in das zu erfassende Füllgut eintaucht, und dessen Wellenimpedanz durch das Füllgut beeinflußt wird.

Ein Echosignal, das sich aus an der Füllgutoberfläche reflektierten Beiträgen und bei Ausbreitung im freien Raum evtl. auch aus weiteren Beiträgen z.B. von Behälterwänden zusammensetzt, wird am Wandlerelement 2 empfangen und als elektrisches Signal an die Sende-/Empfangsschaltung 1 weitergeleitet. Dort wird das empfangene Echo nach Signalverstärkung zur Durchführung eines an sich bekannten, sog. sequential-sampling Verfahrens mit einem dem Sendeimpuls ähnlichen Impuls abgetastet. Ergebnis dieses, auch als Korrelation zu bezeichnenden Vorgangs ist ein zeitgedehntes Echosignal oder Zwischenfrequenzsignal (ZF-Signal) 3.

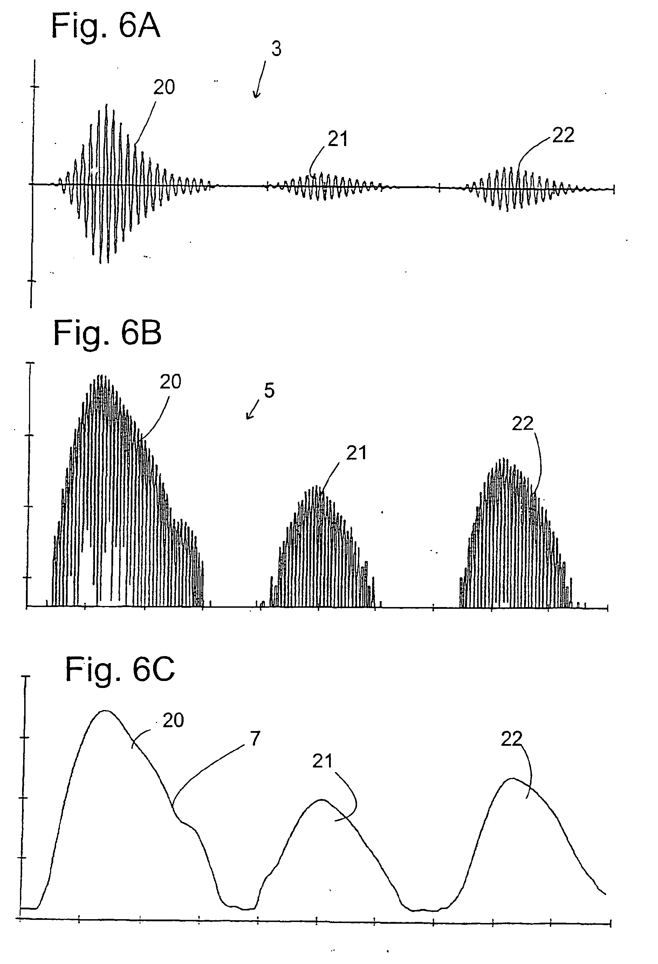

Ein Beispiel eines solchen ZF-Signals 3 findet sich in Fig. 6A. Es enthält im dargestellten Fall mehrere Echoimpulse mit verschiedenen Amplituden. Der erste, größte Echoimpuls 20 in Fig. 6A könnte z.B. von einem Teil des gesendeten Impulses stammen, der vom Sender des Wandlerelements 2 direkt zu dessen Empfänger überkoppelt. Dadurch ist er hinsichtlich seines zeitlichen Abstands zum Sendezeitpunkt sehr konstant und kann so als Zeitreferenz für die Messung der Laufzeit der übrigen Impulse 21, 22 des Echos dienen. Die beiden anderen Impulse 21, 22 sind auf Reflexionen aus dem Behälter zurückzuführen, wobei der Impuls 21 von der Füllgutoberfläche direkt und der zweite Impuls 22 von einer doppelten Reflexion an der Füllgutoberfläche stammt. Dieses sogenannte Mehrfachecho 22 kann bei ungünstiger Einbauposition des Wandlerelments 2 im Behälter größer sein als der eigentliche Nutzimpuls 21. Deshalb ist es von großem Vorteil, wenn bei der Auswertung des Echos gleichzeitig alle Echoimpulse eines Meßzyklus, d.h. alle Impulse, die auf einen gleichen Sendeimpuls zurückgehen, detektiert und gegeneinander abgewogen werden können, um aufgrund bestimmter vorgegebener Regeln den richtigen Echoimpuls, der von der Füllgutoberfläche ausgeht, von Störimpulsen zu unterscheiden.

Da die Amplitudendynamik innerhalb des Echosignals 3 über 80 dB betragen kann, ist eine Logarithmierschaltung 4 zur Kompression der Echoamplituden vorgesehen, deren Eingang das ZF-Signal 3 zugeführt wird. Die Logarithmierschaltung 4 liefert an ihrem Ausgang ein gleichgerichtetes und logarithmiertes Echosignal 5. Dieses Signal ist in Fig. 6B dargestellt.

Dieses logarithmierte Echosignal wird dem Eingang eines Tiefpasses 6 zugeführt, dessen Ausgangssignal 7 die in Fig. 6C gezeigte logarithmische Hüllkurve ist.

Dieses Ausgangssignal 7 sowie das logarithmierte Zwischenfrequenz-Echosignal 5 werden einer Steuer- und Auswerteschaltung 8 zugeführt. Diese umfaßt einen Analog-Digital-Wandler (AD-Wandler) 9, sowie nicht dargestellt, einen Microcontroller mit RAM, ROM und EEPROM, eine Ein-/Ausgabeeinheit und ein Netzteil. Der Microcontroller initiiert einen Meßzyklus über eine Steuerleitung 10 zur Sende-/Empfangsschaltung 1 und wertet die über den AD-Wandler 9 empfangenen und digitalisierten, im RAM gespeicherten Signale 7 und 5 aus.

Durch Messung der Zeitabstände zwischen dem übergekoppelten Impuls 20 und den Echoimpulsen 21,22 des logarithmierten, tiefpassgefilterten Echosignals 7 ermittelt die Steuer-/ Auswerteschaltung 8 die Laufzeit der Echosignale und durch Kenntnis der Ausbreitungsgeschwindigkeit der Signale die Entfernungen der zugrundeliegenden Reflektoren. Die Messung der Zeitabstände kann beispielsweise über die Zeitdifferenz der einzelnen Maxima des logarithmierten, tiefpassgefilterten Echosignals 7 oder die Zeitdifferenz bestimmter Punkte auf den Echoflanken, deren jeweilige Amplitude durch einen bestimmten Bruchteil der Maximalamplitude des betreffenden Echoimpulses definiert ist, erfolgen. Durch Kenntnis von Abständen und Amplituden aller Impulse 20,21,22 ist die Steuer-/ Auswerteschaltung in der Lage, denjenigen Impuls auszuwählen, der mit der größten Wahrscheinlichkeit von einer einfachen Reflexion an der Füllgutoberfläche herrührt.

Die Genauigkeit des endgültigen Meßergebnisses ist abhängig von der Flankensteilheit des gesendeten Impulses; eine Meßgenauigkeit von weniger als einer halben Wellenlänge des Mikrowellenimpulses ist erreichbar.

Anhand von vom AD-Wandler 9 digitalisierten Abtastwerten des gleichgerichteten logarithmierten Echosignals 5 ist die Steuer- und Auswerteschaltung 8 in der Lage, Zeitpunkte der Nulldurchgänge des Signals 3 und damit die Phasenverschiebungen der Impulse 21,22 in Bezug auf den Sendeimpuls zu berechnen. Mögliche Weglängen des Signals von Wandlerelement 2 zur Füllgutoberfläche und zurück, die mit der so gemessenen Phasenverschiebung kompatibel sind, liegen jeweils um ½ Wellenlänge des Mikrowellensignals auseinander; bei hinreichender Genauigkeit der anhand des Signals 7 vorgenommenen Laufzeitmessung gibt es im Genauigkeitsintervall dieser Messung einen Wert, der mit der gemessenen Phasenverschiebung kompatibel ist und den wahren Abstand der Füllgutoberfläche von dem Wandlerelement 2 repräsentiert. So läßt sich durch Kombination von Zeitdifferenz- und Phasendifferenzmessung die Meßgenauigkeit erheblich verbessern.

Die in Fig. 1 gezeigte Schaltung erfordert zum Digitalisieren der Signale 5 und 7 im Zeitmultiplex einen schnellen, hochauflösenden AD-Wandler 9. Dieser kann auch durch zwei AD-Wandler ersetzt werden, von denen einer nur das langsam veränderliche Signal 7 wandelt; die Arbeitsgeschwindigkeit des für das Signal 5 vorgesehenen Wandlers muß jedoch größer als die zweifache Zwischenfrequenz sein.

Der Schaltungsaufwand für die AD-Wandlung läßt sich reduzieren, wenn, wie in Fig. 2 gezeigt, das gleichgerichtete und logarithmierte Echo 5 unmittelbar einem einzigen AD-Wandler 9 der Steuer- und Auswerteschaltung 8 zugeführt wird, und die für die Zeitdifferenzmessung erforderliche Tiefpaßfilterung zum Erzeugen der Hüllkurve mit Hilfe eines - gegebenenfalls durch geeignete Software des Microcontrollers implementierten - Digitalfilters 6 vorgenommen wird.

Eine andere Variante der erfindungsgemäßen Schaltungsanordnung ist in Fig. 3 gezeigt. Sie unterscheidet sich von der Schaltungsanordnung der Fig. 1 durch die Hinzufügung von zwei hintereinander geschalteten Differenzierschaltungen 12, die die zweite zeitliche Ableitung des logarithmierten Echos 5 bilden und der Steuer- und Auswerteschaltung 8 zuführen.

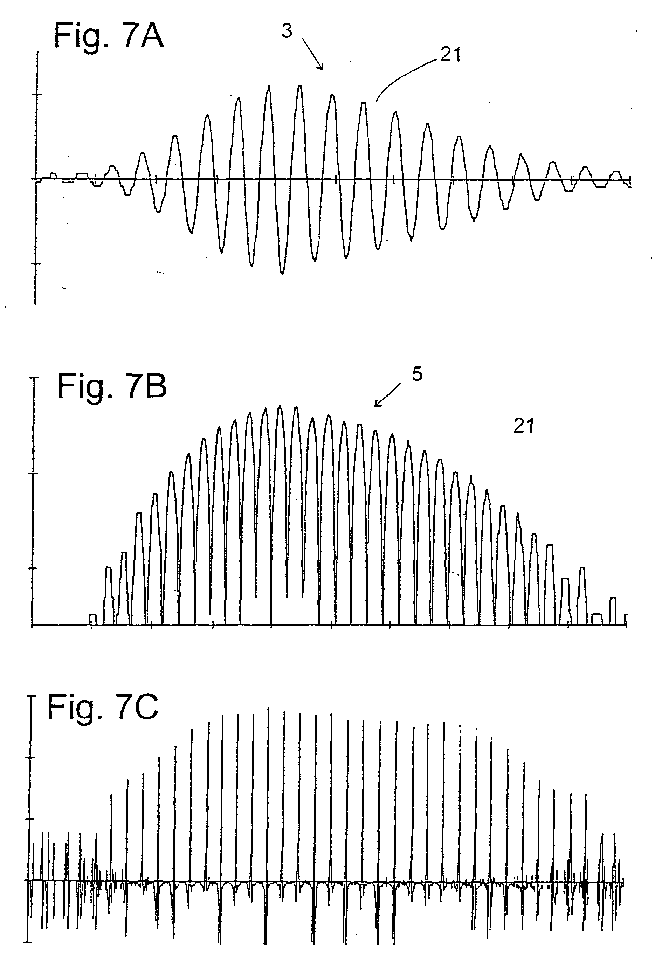

Zur Erläuterung der Funktionsweise dieser Ausgestaltung wird Bezug genommen auf die Figs. 7A bis 7C. Fig. 7A zeigt in vergrößertem zeitlichen Maßstab einen Impuls, z.B. den Impuls 21, des auf Zwischenfrequenz transformierten Echosignals 3. Fig. 7B zeigt den gleichen Impuls 21 des gleichgerichteten und logarithmierten Echos 5. Jeder Nulldurchgang des ursprünglichen ZF-Signals 3 ist hier durch ein scharfes lokales Minimum ersetzt. Die zweimalige zeitliche Ableitung des Signals 5 ergibt den in Fig. 7C gezeigten Verlauf, wo jedes dieser lokalen Minima einem kurzen positiven Impuls entspricht.

Das in Fig. 7C gezeigte Signal wird als Ausgangssignal der zweiten Differenzierschaltung 12 der Meß- und Auswerteschaltung 8 zugeführt. Zum Erfassen eines Nulldurchgangszeitpunkts des Signals 3 ist es nicht erforderlich, das Ausgangssignal der Differenzierschaltung 12 zu digitalisieren; es genügt, die kurzen positiven Impulse zu vereinheitlichen, z.B. mit Hilfe eines Schmitt-Triggers, um sie dann unmittelbar einem Timer 13 der Meß- und Auswerteschaltung 8 zuzuführen. Dies erlaubt auf einfache Weise eine Bestimmung der Phasenlage der einzelnen Impulse 20 21, 22 des Echos.

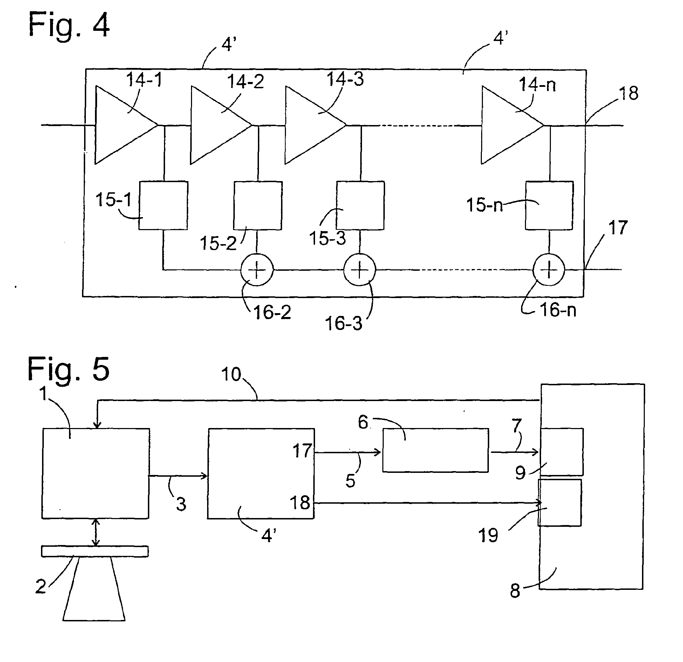

In Fig. 4 ist ein Blockschaltbild einer Logarithmierschaltung 4' gezeigt, die im Rahmen der vorliegenden Erfindung vorteilhaft einsetzbar ist. Die Logarithmierschaltung besteht aus mehreren Stufen mit jeweils einem Begrenzerverstärker 14-1, 14-2, ... 14-n, wobei der Eingang des Verstärkers 14-1 der ersten Stufe den Signaleingang der Logarithmierschaltung bildet und die Eingänge der Verstärker 14-2, ... 14-n der nachfolgenden Stufen jeweils mit dem Ausgang der Verstärker 14-1, ... 14-(n-1) der jeweils vorhergehenden Stufe verbunden sind. Jede Stufe i, i=1, ... n umfaßt ferner einen Gleichrichter 15-i, dessen Eingang mit dem Ausgang des Verstärkers 14-i der gleichen Stufe verbunden ist, und dessen Ausgang jeweils mit einem Eingang eines Summationsgliedes 16-2, 16-3, ... 16-n einer Kette von hintereinandergeschalteten Summationsgliedern verbunden ist.

Der Ausgang des letzten Summationsgliedes 16-n der Kette bildet einen ersten Ausgang 17 der Logarithmierschaltung 4'. Das an diesem Ausgang 17 erscheinende Signal ist im wesentlichen proportional zur Anzahl der von einem anliegenden Eingangssignal in Sättigung getriebenen Verstärker und entspricht somit, da die Verstärkung aller Verstärker 14-1, 14-2, ...14-n die gleiche ist, in guter Näherung dem Logarithmus des gleichgerichteten Eingangssignals. Genau genommen ist die Kennlinie der Verstärkerkette zwar kein exakter Logarithmus, sondern eher eine Aneinanderreihung von Geradensegmenten; dies ist jedoch für die Zwecke der Erfindung nicht weiter störend, da mathematische Exaktheit hier nicht erforderlich ist und notfalls durch Vergrößern der Zahl der Verstärker und Konstanthalten der Gesamtverstärkung der Verstärkerkette die Kennlinie eine Logarithmusfunktion beliebig genau approximieren kann.

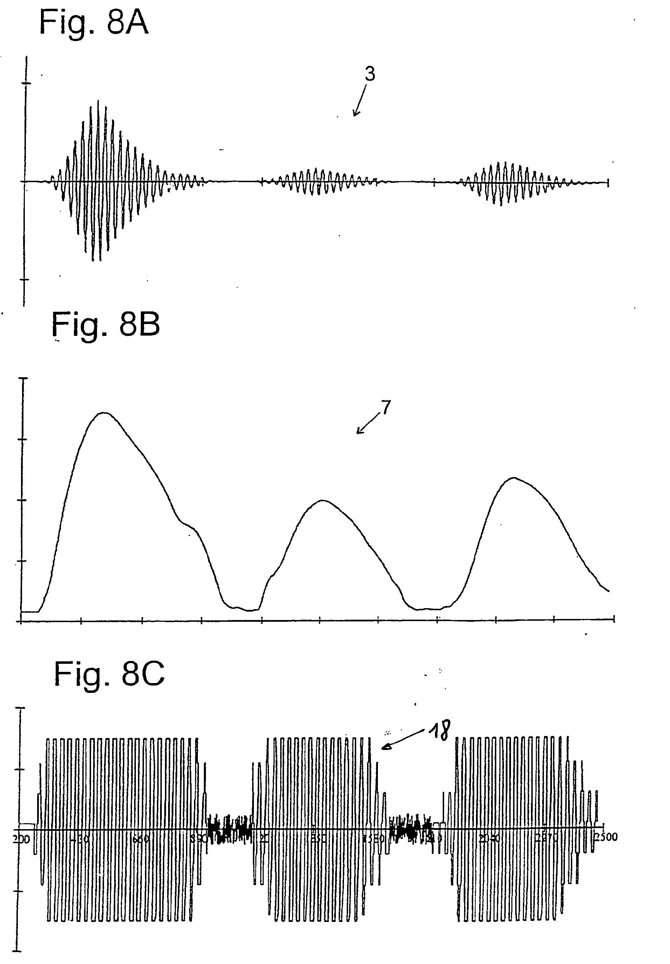

Ein zweiter Ausgang 18 der Logarithmierschaltung 4' ist direkt mit dem Ausgang des Verstärkers 14-n der letzten Stufe verbunden. Dieser Verstärker 14-n ist immer der erste aus der ganzen Verstärkerkette, der in Sättigung geht. Fig. 8C zeigt den Verlauf des Ausgangssignals am zweiten Ausgang 18 im Verlauf des in Fig. 8A gezeigten ZF-Echosignals. Man erkennt, daß das Signal am Ausgang 18 praktisch stets gesättigt ist, wenn ein Echoimpuls 20, 21, 22 am Wandlerelement eintrifft. Die Zeitpunkte des Nulldurchgangs sind wegen der hohen Flankensteilheit des Signals am Ausgang 18 mit hoher Genauigkeit erfaßbar und können, wie oben beschrieben, zum Triggern eines Timers der Steuer- und Auswerteschaltung genutzt werden, der die Phasenmessung des Echosignals ermöglicht.

Fig. 5 zeigt eine Schaltungsanordnung zur Entfernungsmessung, die die Logarithmierschaltung 4' aus Fig. 4 verwendet.

Das logarithmierte Echosignal 5 am Ausgang 17 wird wie bei den zuvor beschriebenen Anordnungen der Figs. 1 und 3 über einen Tiefpassfilter 6 einem AD-Wandler 9 der Steuer- und Auswerteschaltung 8 zugeführt.

Dieser verarbeitet nur das relativ langsam veränderliche tiefpassgefilterte Echosignal 7 und braucht daher keine übermäßig hohe Arbeitsgeschwindigkeit zu erreichen.

Das Signal vom Ausgang 18 wird einem zweiten Eingangswandler 19 zugeführt, der im Gegensatz zum Wandler 9 keine hohe Auflösung benötigt; er muss lediglich in der Lage sein, positiven und negativen Sättigungspegel des Signals vom Ausgang 18 voneinander und von einem ungesättigten Signalpegel zu unterscheiden. Ein solcher Eingangswandler kann z.B. aus zwei Komparatoren oder Schmitt-Triggern aufgebaut sein und erlaubt die Erfassung der Nulldurchgänge des Signals vom Ausgang 18 und damit die Messung der Phase der Echoimpulse 20, 21, 22 mit hoher Auflösung.

In einer alternativen, sehr einfachen Ausführungsform wird anstelle des zweiten Eingangswandlers ein oder mehrere Timer innerhalb der Steuer- /Auswerteschaltung 8 direkt durch die positiven oder alternativ negativen Flanken des Signals von Ausgang 18 gestartet und später gestoppt.

Beispielsweise startet eine beliebige positive Flanke des übergekoppelten Sendepulses einen Timer und eine beliebige positive Flanke des Empfangspulses 21 stoppt diesen Timer. Die Freigabe des Start- bzw. Stoppeingangs des Timers erfolgt durch gewisse Zeitfenster, die von der Steuer- /Auswerteschaltung aufgrund der groben zeitlichen Position der relevanten Echoimpulse aus einer vorhergegangenen Messung gesetzt werden.

Die durch den Timer ermittelte Zeitdifferenz läßt sich unter Kenntnis der Periodendauer einer Wellenlänge umrechnen in ein ganzzahliges Vielfaches von 360° plus einem Zusatzwinkel kleiner 360°. Durch Addition bzw. Subtraktion von k*360° (k=0,1,2,3...) zur vorläufigen Phasendifferenz ist die endgültige Phasendifferenz bestimmbar, die kompatibel zum Echoabstand ist, der sich aus der Auswertung der Zeitabstandes der entsprechenden Impulse des Echosignals 7 ergibt. Kompatibel bedeutet in diesem Fall, dass die Echoabstände aus der Zeitdifferenzmessung und der Phasendifferenzmessung sich maximal um eine halbe Wellenlänge des ZF-Echosignals 3 unterscheiden. Das Ergebnis der Zeitdifferenzmessung ist dabei als grobes Messergebnis zu betrachten, welches durch Ergebnis der Phasendifferenzmessung korrigiert wird.

Obwohl nicht gezeigt, können auch im Falle der Schaltung von Fig. 5 eine Differenzierschaltung 12 zwischen dem Ausgang 18 und dem Eingangswandler 19 angeordnet werden, die jeden Vorzeichenwechsel des Signals in einen kurzen positiven oder negativen Impuls umsetzt.

Ein zusätzlicher Vorteil bei der Verwendung der Logarithmierschaltung 4' ist, daß eine selektive Triggerung des Timers jeweils nur bei steigenden oder nur bei fallenden Flanken des Signals am Ausgang 18 möglich ist. Das heißt, während die Schaltungsanordnung gemäß Fig. 3 nur eine Phasenmessung im Bereich von 0 bis 180° erlaubt, ist mit der Schaltungsanordnung gemäß Fig. 5 eine Phasenmessung im Bereich von 0 bis 360° möglich. Die Anforderungen an die Genauigkeit der Messung der Zeitverschiebung zwischen den Hüllkurven der einzelnen Echoimpulse ist daher geringer als im Falle der Fig. 3; trotzdem kann die gleiche Auflösung der Abstandsmessung erreicht werden.

## Patentansprüche

1. Verfahren zum Messen der Entfernung eines Gegenstandes mit den Schritten:
a) Aussenden eines impulsförmigen Signals von einem Sender (2) zum Gegenstand,
b) Auffangen eines Echosignals (3; 21, 22) des impulsförmigen Signals,
c) Logarithmierung des aufgefangenen Echosignals (3; 21, 22);
d) Messen einer Zeitdifferenz zwischen dem Senden des impulsförmigen Signals und dem Auffangen des Echosignals (21, 22);
e) Messen einer Phasendifferenz zwischen dem gesendeten impulsförmigen Signal und dem Echosignal (21, 22);
f) Bestimmung der Entfernung zum Gegenstand unter Berücksichtigung der Ausbreitungsgeschwindigkeit des Signals mit der gemessenen Zeitdifferenz und der gemessenen Phasendifferenz;
**dadurch gekennzeichnet, dass**
das Messen der Zeitdifferenz am logarithmierten und nachfolgend tiefpassgefilterten Echosignal erfolgt, und
dass das Messen der Phasendifferenz unmittelbar am logarithmierten Echosignal erfolgt.

2. Verfahren nach Anspruch 1, **dadurch gekennzeichnet, dass** zum Messen der Phasendifferenz in Schritt e) Minima des logarithmierten Echosignals (5; 21, 22) ermittelt werden.

3. Verfahren nach Anspruch 2, **dadurch gekennzeichnet, dass** die Minima des logarithmierten Echosignals (5; 21, 22) durch Differenzieren ermittelt werden.

4. Verfahren nach einem der vorhergehenden Ansprüche, **dadurch gekennzeichnet, dass** die Logarithmierung mit Hilfe einer Kette von sättigbaren Verstärkern (14-1, ..., 14-n) durchgeführt wird, wobei die Ausgangssignale der einzelnen Verstärker gleichgerichtet und addiert werden, um das logarithmierte Echosignal (5; 21, 22) zu bilden.

5. Verfahren zum Messen der Entfernung eines Gegenstandes mit den Schritten:
a) Aussenden eines impulsförmigen Signals von einem Sender (2) zum Gegenstand,
b) Auffangen eines Echosignals (3; 21, 22) des impulsförmigen Signals,
c) Logarithmierung des aufgefangenen Echosignals (3; 21, 22);
d) Messen einer Zeitdifferenz zwischen dem Senden des impulsförmigen Signals und dem Auffangen des Echosignals (21, 22);
e) Messen einer Phasendifferenz zwischen dem gesendeten impulsförmigen Signal und dem Echosignal (21, 22);
f) Bestimmung der Entfernung zum Gegenstand unter Berücksichtigung der Ausbreitungsgeschwindigkeit des Signals mit der gemessenen Zeitdifferenz und der gemessenen Phasendifferenz;
**dadurch gekennzeichnet, dass** das aufgefangene Echosignal (3; 21, 22) mit Hilfe einer Kette von sättigbaren Verstärkern (14-1, ..., 14-n) logarithmiert wird, wobei die Ausgangssignale der einzelnen Verstärker zur Gewinnung des Logarithmus gleichgerichtet und addiert werden, wobei Schritt d) am logarithmierten Echosignal (5; 21, 22) durchgeführt wird und Schritt e) am Ausgangssignal (18) des letzten Verstärkers (14-n) der Kette durchgeführt wird.

6. Verfahren nach Anspruch 5, **dadurch gekennzeichnet, dass** Schritt e) das Differenzieren des Ausgangssignals (18) des letzten Verstärkers umfasst.

7. Verfahren nach einem der Ansprüche 1 bis 6, **dadurch gekennzeichnet, dass** das logarithmierte Echosignal (5; 21, 22) digitalisiert wird und die Tiefpassfilterung sowie die Messung der Zeitdifferenz und der Phasendifferenz an dem digitalisierten logarithmierten Echo signal vorgenommen werden.

8. Verfahren nach Anspruch 5 oder 6, **dadurch gekennzeichnet, dass** das tiefpassgefilterte, logarithmierte Echosignal (7; 21, 22) und das Ausgangssignal (18) des letzten Verstärkers (14-n) digitalisiert werden, und dass die Messung der Zeitdifferenz am digitalisierten, tiefpassgefilterten, logarithmierten Echosignal (7; 21, 22) und die Messung der Phasendifferenz am digitalisierten Ausgangssignal des letzten Verstärkers (14-n) vorgenommen werden.

9. Verfahren nach einem der vorhergehenden Ansprüche, **dadurch gekennzeichnet, dass** vor der Logarithmierung eine Transformation des Echosignals (3; 21, 22) auf eine Zwischenfrequenz durchgeführt wird.

10. Schaltungsanordnung zum Messen der Entfernung eines Gegenstandes anhand des von dem Gegenstand reflektierten Echos eines impulsförmigen Signals, mit einer ersten Messschaltung (8) zum Messen einer Zeitdifferenz zwischen dem Senden des impulsförmigen Signals und dem Auffangen eines Echosignals (3; 21, 22); einer zweiten Messschaltung (8) zum Messen einer Phasendifferenz zwischen dem gesendeten impulsförmigen Signal und dem Echosignal (3; 21, 22) und einer Auswertungsschaltung (8) zum Bestimmen der Entfernung zum Gegenstand unter Berücksichtigung der Ausbreitungsgeschwindigkeit des Signals mit der gemessenen Zeitdifferenz und der gemessenen Phasendifferenz, wobei eine Logarithmierschaltung (4, 4') zum Logarithmieren des Echosignals (3; 21, 22) vorgesehen ist, **dadurch gekennzeichnet, dass** die Logarithmierschaltung (4, 4') einerseits über einen Tiefpassfilter (6) einem Signaleingang der ersten und andererseits unmittelbar einem Signaleingang der zweiten Messschaltung vorgeschaltet ist.

11. Schaltungsanordnung nach Anspruch 10, **dadurch gekennzeichnet, dass** die zweite Messschaltung (8) eine Differenzierschaltung (12) zum Differenzieren des logarithmierten Echosignals umfasst.

12. Schaltungsanordnung nach Anspruch 10 oder 11, **dadurch gekennzeichnet, dass** die Logarithmierschaltung (4') eine Kette von sättigbaren Verstärkern (14-1, ..., 14-n) umfasst, wobei der Ausgang jedes Verstärkers (14-1, ..., 14-(n-1)) mit Ausnahme des letzten (14-n) mit dem Eingang eines nachfolgenden Verstärkers (14-2, ..., 14-n) und mit einem Eingang eines Gleichrichters (15-1, ..., 15-n) verbunden ist, und wobei die Ausgänge der Gleichrichter (15-1, ..., 15-n) mit Eingängen einer Summationsschaltung (16-2, ..., 16-n) verbunden sind, deren Ausgang (17) das logarithmierte Echosignal (5) liefert.

13. Schaltungsanordnung zum Messen der Entfernung eines Gegenstandes anhand des von dem Gegenstand reflektierten Echos eines impulsförmigen Signals, mit einer ersten Messschaltung (8) zum Messen einer Zeitdifferenz zwischen dem Senden des impulsförmigen Signals und dem Auffangen eines Echosignals (3; 21, 22); einer zweiten Messschaltung (8) zum Messen einer Phasendifferenz zwischen dem gesendeten impulsförmigen Signal und dem Echosignal (3; 21, 22) und einer Auswertungsschaltung (8) zum Bestimmen der Entfernung zum Gegenstand unter Berücksichtigung der Ausbreitungsgeschwindigkeit des Signals mit der gemessenen Zeitdifferenz und der gemessenen Phasendifferenz, wobei eine Logarithmierschaltung (4, 4') zum Logarithmieren des Echosignals (3; 21, 22) vorgesehen ist, **dadurch gekennzeichnet, dass** die Logarithmierschaltung (4') eine Kette aus sättigbaren Verstärkern (14-1, ..., 14-n), Gleichrichter (15-1, ..., 15-n) und eine Summationsschaltung (16-1, ..., 16-n) umfasst, wobei der Ausgang jedes Verstärkers (14-1, ..., 14-n) mit Ausnahme des letzten (14-n) mit dem Eingang eines nachfolgenden Verstärkers (14-2, ..., 14-n) und mit einem Eingang eines der Gleichrichter (15-1, ..., 15-n) verbunden ist, die Ausgänge der Gleichrichter (15-1, ..., 15-n) mit Eingängen der Summationsschaltung verbunden sind, deren Ausgang (17) das logarithmierte Echosignal (5) an die erste Messschaltung (8) liefert, und wobei der Ausgang (18) des letzten Verstärkers (14-n) ein Eingangssignal für die zweite Messschaltung (8) liefert.

14. Schaltungsanordnung nach Anspruch 13, **dadurch gekennzeichnet, dass** der zweiten Messschaltung (8) eine Differenzierschaltung (12) zum Differenzieren des Ausgangssignals (18) des letzten Verstärkers (14-n) vorgeschaltet ist.

15. Schaltungsanordnung nach einem der Ansprüche 10 bis 14 **dadurch gekennzeichnet, dass** die Messschaltungen (8) und das Tiefpassfilter (6) durch einen Mikrocontroller implementiert sind und dass ein A/D-Wandler (9) zwischen dem Ausgang der Logarithmierschaltung (4) und einem Eingang des Mikrocontrollers angeordnet ist.

16. Schaltungsanordnung nach einem der Ansprüche 10 bis 14 **dadurch gekennzeichnet, dass** die Messschaltungen (8) und das Tiefpassfilter (6) durch einen Mikrocontroller implementiert sind und dass ein A/D-Wandler (9, 19) zwischen dem Ausgang der Logarithmierschaltung (4) und einem Eingang des Mikrocontrollers sowie zwischen dem Ausgang (18) des letzten Verstärkers (14-n) und einem Eingang des Mikrocontrollers angeordnet ist.

## Claims

1. Method for measuring the distance of an object, comprising the steps:
a) emitting a pulsed signal from a transmitter (2) to the object;
b) picking up an echo signal (3; 21, 22) of the pulsed signal;
c) logarithmising the picked-up echo signal (3; 21, 22);
d) measuring a time difference between the transmission of the pulsed signal and the picking-up of the echo signal (21, 22);
e) measuring a phase difference between the transmitted pulsed signal and the echo signal (21, 22);
f) determining the distance from the object, taking account of the propagation speed of the signal, using the measured time difference and the measured phase difference;
**characterised in that**
the measurement of the time difference takes place on the logarithmised and then low-pass-filtered echo signal, and **in that** the measurement of the phase difference takes place directly on the logarithmised echo signal.

2. Method according to claim 1, **characterised in that,** in order to measure the phase difference in step e), minima of the logarithmised echo signal (5; 21, 22) are determined.

3. Method according to claim 2, **characterised in that** the minima of the logarithmised echo signal (5; 21, 22) are determined by differentiation.

4. Method according to one of the preceding claims, **characterised in that** the logarithmisation is carried out by means of a chain of saturable amplifiers (14-1, ..., 14-n), wherein the output signals of the individual amplifiers are rectified and added in order to form the logarithmised echo signal (5; 21, 22).

5. Method for measuring the distance of an object, comprising the steps:
a) emitting a pulsed signal from a transmitter (2) to the object;
b) picking up an echo signal (3; 21, 22) of the pulsed signal;
c) logarithmising the picked-up echo signal (3; 21, 22);
d) measuring a time difference between the transmission of the pulsed signal and the picking-up of the echo signal (21, 22);
e) measuring a phase difference between the transmitted pulsed signal and the echo signal (21, 22);
f) determining the distance from the object, taking account of the propagation speed of the signal, using the measured time difference and the measured phase difference;
**characterised in that** the picked-up echo signal (3; 21, 22) is logarithmised by means of a chain of saturable amplifiers (14-1, ..., 14-n), wherein the output signals of the individual amplifiers are rectified and added in order to obtain the logarithm, wherein step d) is carried out on the logarithmised echo signal (5; 21, 22) and step e) is carried out on the output signal (18) of the last amplifier (14-n) of the chain.

6. Method according to claim 5, **characterised in that** step e) comprises the differentiation of the output signal (18) of the last amplifier.

7. Method according to one of claims 1 to 6, **characterised in that** the logarithmised echo signal (5; 21, 22) is digitised and the low-pass filtering and also the measurement of the time difference and of the phase difference are carried out on the digitised, logarithmised echo signal.

8. Method according to claim 5 or 6, **characterised in that** the low-pass-filtered, logarithmised echo signal (7; 21, 22) and the output signal (18) of the last amplifier (14-n) are digitised, and **in that** the measurement of the time difference is carried out on the digitised, low-pass-filtered, logarithmised echo signal (7; 21, 22) and the measurement of the phase difference is carried out on the digitised output signal of the last amplifier (14-n).

9. Method according to one of the preceding claims, **characterised in that,** prior to the logarithmisation, a transformation of the echo signal (3; 21, 22) to an intermediate frequency is carried out.

10. Circuit arrangement for measuring the distance of an object based on the echo of a pulsed signal reflected from the object, comprising a first measurement circuit (8) for measuring a time difference between the transmission of the pulsed signal and the picking-up of an echo signal (3; 21, 22), a second measurement circuit (8) for measuring a phase difference between the transmitted pulsed signal and the echo signal (3; 21, 22), and an evaluation circuit (8) for determining the distance from the object, taking account of the propagation speed of the signal, using the measured time difference and the measured phase difference, wherein a logarithmisation circuit (4, 4') is provided for logarithmising the echo signal (3; 21, 22), **characterised in that** connected upstream of the logarithmisation circuit (4, 4') is on the one hand a signal input of the first measurement circuit via a low-pass filter (6) and on the other hand directly a signal input of the second measurement circuit.

11. Circuit arrangement according to claim 10, **characterised in that** the second measurement circuit (8) comprises a differentiation circuit (12) for differentiating the logarithmised echo signal.

12. Circuit arrangement according to claim 10 or 11, **characterised in that** the logarithmisation circuit (4') comprises a chain of saturable amplifiers (14-1, ..., 14-n), wherein the output of each amplifier (14-1, ..., 14-(n-1)), with the exception of the last (14-n), is connected to the input of a subsequent amplifier (14-2, ..., 14-n) and to an input of a rectifier (15-1, ..., 15-n), and wherein the outputs of the rectifiers (15-1, ..., 15-n) are connected to inputs of a summation circuit (16-2, ..., 16-n), the output (17) of which supplies the logarithmised echo signal (5).

13. Circuit arrangement for measuring the distance of an object based on the echo of a pulsed signal reflected from the object, comprising a first measurement circuit (8) for measuring a time difference between the transmission of the pulsed signal and the picking-up of an echo signal (3; 21, 22), a second measurement circuit (8) for measuring a phase difference between the transmitted pulsed signal and the echo signal (3; 21, 22), and an evaluation circuit (8) for determining the distance from the object, taking account of the propagation speed of the signal, using the measured time difference and the measured phase difference, wherein a logarithmisation circuit (4, 4') is provided for logarithmising the echo signal (3; 21, 22), **characterised in that** the logarithmisation circuit (4') comprises a chain of saturable amplifiers (14-1, ..., 14-n), rectifiers (15-1, ..., 15-n) and a summation circuit (16-1, ..., 16-n), wherein the output of each amplifier (14-1, ..., 14-n), with the exception of the last (14-n), is connected to the input of a subsequent amplifier (14-2, ..., 14-n) and to an input of one of the rectifiers (15-1, ..., 15-n), the outputs of the rectifiers (15-1, ..., 15-n) are connected to inputs of the summation circuit, the output (17) of which supplies the logarithmised echo signal (5) to the first measurement circuit (8), and wherein the output (18) of the last amplifier (14-n) supplies an input signal for the second measurement circuit (8).

14. Circuit arrangement according to claim 13, **characterised in that** connected upstream of the second measurement circuit (8) is a differentiation circuit (12) for differentiating the output signal (18) of the last amplifier (14-n).

15. Circuit arrangement according to one of claims 10 to 14, **characterised in that** the measurement circuits (8) and the low-pass filter (6) are implemented by a microcontroller, and **in that** an A/D converter (9) is arranged between the output of the logarithmisation circuit (4) and an input of the microcontroller.

16. Circuit arrangement according to one of claims 10 to 14, **characterised in that** the measurement circuits (8) and the low-pass filter (6) are implemented by a microcontroller, and **in that** an A/D converter (9, 19) is arranged between the output of the logarithmisation circuit (4) and an input of the microcontroller and also between the output (18) of the last amplifier (14-n) and an input of the microcontroller.

## Revendications

1. Procédé de mesure de l'éloignement d'un objet comprenant les étapes suivantes :
a) émission d'un signal de forme impulsionnelle par un émetteur (2) vers l'objet,
b) réception d'un signal d'écho (3 ; 21, 22) du signal de forme impulsionnelle,
c) transformation logarithmique du signal d'écho reçu (3 ; 21, 22) ;
d) mesure d'une différence de temps entre l'émission du signal de forme impulsionnelle et la réception du signal d'écho (21, 22) ;
e) mesure d'une différence de phase entre le signal de forme impulsionnelle émis et le signal d'écho (21, 22) ;
f) détermination de l'éloignement par rapport à l'objet en tenant compte de la vitesse de déploiement du signal avec la différence de temps mesurée et la différence de phase mesurée ;
**caractérisé en ce qu'**
on fait la mesure de la différence de temps sur le signal d'écho, transformé logarithmiquement et ensuite filtré par un filtre passe-bas et
on fait la mesure de la différence de phase directement sur le signal d'écho dans la transformation logarithmique.

2. Procédé selon la revendication 1,
**caractérisé en ce que**
pour mesure la différence de phase dans l'étape e), on détermine des minimas du signal d'écho transformés logarithmiquement (5 ; 21, 22).

3. Procédé selon la revendication 2,
**caractérisé en ce qu'**
on détermine les minimas du signal d'écho transformé logarithmiquement (5 ; 21, 22) par différentiation.

4. Procédé selon l'une des revendications précédentes,
**caractérisé en ce qu'**
on effectue la transformation logarithmique à l'aide d'une chaîne d'amplificateurs saturables (14-1, ..., 14-n), et on redresse les signaux de sortie des différents amplificateurs et on les additionne pour obtenir le signal d'écho à transformation logarithmique (5 ; 21, 22).

5. Procédé de mesure de l'éloignement d'un objet selon les étapes suivantes :
a) émission d'un signal de forme impulsionnelle par un émetteur (2) vers l'objet,
b) réception d'un signal d'écho (3 ; 21, 22) du signal de forme impulsionnelle,
c) transformation logarithmique du signal d'écho reçu (3 ; 21, 22) ;
d) mesure d'une différence de temps entre l'émission du signal de forme impulsionnelle et la réception du signal d'écho (21, 22) ;
e) mesure d'une différence de phase entre le signal de forme impulsionnelle émis et le signal d'écho (21, 22) ;
f) détermination de l'éloignement de l'objet en tenant compte de la vitesse de déploiement du signal avec la différence de temps mesuré et la différence de phase mesurée,
**caractérisé en ce qu'**
on applique une transformation logarithmique au signal d'écho reçu (3 ; 21, 22) à l'aide d'une chaîne d'amplificateurs saturables (14-1, ..., 14-n),
les signaux de sortie des différents amplificateurs étant redressés et additionnés pour obtenir le logarithme,
l'étape d) étant effectuée sur le signal d'écho (5 ; 21, 22) transformé logarithmiquement et l'étape e) est effectuée sur le signal de sortie (18) du dernier amplificateur (14-n) de la chaîne.

6. Procédé selon la revendication 5,
**caractérisé en ce que**
l'étape e) consiste à différentier le signal de sortie (18) du dernier amplificateur.

7. Procédé selon l'une des revendications 1 à 6,
**caractérisé en ce qu'**
on numérise le signal d'écho transformé logarithmiquement (5 ; 21, 22) et le filtrage passes-bas ainsi que la mesure de la différence de temps et de la différence de phase sur le signal d'écho transformé logarithmiquement, numérisé.

8. Procédé selon la revendication 5 ou 6,
**caractérisé en ce qu'**
on numérise le signal d'écho (7 ; 21, 22) logarithmisé, filtré par un filtre passe-bas et le signal de sortie (18) du dernier amplificateur (14-n) et
on effectue la mesure de la différence de temps sur le signal d'écho (7 ; 21, 22) transformé logarithmiquement, filtré par un filtre passe-bas et numérisé, et
on effectue la mesure de la différence de phase sur le signal de sortie numérisé du dernier amplificateur (14-n).

9. Procédé selon l'une des revendications précédentes,
**caractérisé en ce qu'**
avant de transformer logarithmiquement, on effectue une transformation du signal d'écho (3 ; 21, 22) pour lui appliquer une fréquence intermédiaire.

10. Circuit de mesure de l'éloignement d'un objet à l'aide d'un écho ou d'un signal de forme impulsionnelle réfléchi par l'objet, comprenant un premier circuit de mesure (8) pour mesurer une différence de temps entre l'émission du signal de forme impulsionnelle et la réception d'un signal d'écho (3 ; 21, 22), un second circuit de mesure (8) pour mesurer une différence de phase entre le signal de forme impulsionnelle émis et le signal d'écho (3 ; 21, 22) et un circuit d'exploitation (8) pour déterminer l'éloignement de l'objet en tenant compte de la vitesse de déploiement du signal avec la différence de temps mesuré et la différence de hases mesurée, et il est prévu un circuit de transformation logarithmique (4, 4') pour transformer logarithmiquement le signal d'écho (3 ; 21, 22),
**caractérisé en ce que**
le circuit de transformation logarithmique (4, 4') est d'une part, relié par un filtre passe-bas (6) à une entrée de signal du premier circuit de mesure et d'autre part, directement par une entrée de signal au second circuit de mesure.

11. Circuit selon la revendication 10,
**caractérisé en ce que**
le second circuit de mesure (8) est un circuit de différentiation (12) pour différentier le signal d'écho transformé logarithmiquement.

12. Circuit selon la revendication 10 ou 11,
**caractérisé en ce que**
le circuit de transformation logarithmique (4') comporte une chaîne d'amplificateurs saturables (14-1, ..., 14-n),
la sortie de chaque amplificateur [14-1, ..., 14-(n-1)], à l'exception du dernier amplificateur (14-n), étant reliée à l'entrée de l'amplificateur suivant (14-2, ..., 14-n) et à l'entrée d'un redresseur (15-1, ..., 15-n) et
les sorties des redresseurs (15-1, ..., 15-n) étant reliés aux entrées d'un circuit de sommation (16-2, ..., 16-n) dont la sortie (17) fournit le signal d'écho transformé logarithmiquement (5).

13. Circuit de mesure de l'éloignement d'un objet à l'aide du signal de forme impulsionnelle réfléchi par l'objet,
comprenant un premier circuit de mesure (8) pour mesure une différence de temps entre l'émission du signal de forme impulsionnelle et la réception d'un signal d'écho (3 ; 21, 22), un second circuit de mesure (8) pour mesurer une différence de phase entre le signal de forme impulsionnelle émis et le signal d'écho (3 ; 21, 22) et un circuit d'exploitation (8) pour déterminer la distance de l'objet en tenant compte de la vitesse de déploiement du signal avec la différence de temps mesurée et la différence de phase mesurée, un circuit de transformation de transformation logarithmique (4, 4') étant prévu pour transformer logarithmiquement le signal d'écho (3 ; 21, 22),
**caractérisé en ce que**
le circuit de transformation logarithmique (4') est formé d'une chaîne d'amplificateurs saturables (14-1, ..., 14-n), de redresseurs (15-1, ..., 15-n) et d'un circuit de sommation (16-1, ..., 16-n),
la sortie ce chaque amplificateur (14-1, ..., 14-n) étant reliée, à l'exception du dernier amplificateur (14-n), à l'entrée de l'amplificateur suivant (14-2, ..., 14-n) et à une entrée de l'un des redresseurs (15-1, ..., 15-n), les sorties des redresseurs (15-1, ..., 15-n) étant reliées aux entrées du circuit de sommation dont la sortie (17) fournit le signal d'écho à transformation logarithmique (5) au premier circuit de mesure (8), et
la sortie (18) du dernier amplificateur (14-n) fournit le signal d'entrée pour le second circuit de mesure (8).

14. Circuit selon la revendication 13,
**caractérisé en ce que**
le second circuit de mesure (8) est précédé d'un circuit de différentiation (12) pour différentier le signal de sortie (18) des derniers amplificateurs (14-n).

15. Circuit selon l'une des revendications 10 à 14,
**caractérisé en ce que**
le circuit de mesure (8) et le filtre passe-bas (6) sont implémentés par un microcontrôleur et un convertisseur A/D (analogique/ numérique) (9) est prévu entre la sortie du circuit de transformation logarithmique (4) et une entrée du microcontrôleur.

16. Circuit selon l'une des revendications 10 à 14,
**caractérisé en ce que**
les circuits de mesure (8) et le filtre passe-bas (6) sont implémentés par un microcontrôleur et un convertisseur A/D (analogique/numérique) (9, 19) est prévu entre la sortie du circuit de transformation logarithmique (4) et une entrée du microcontrôleur ainsi qu'entre la sortie (18) du dernier amplificateur (14-n) et une entrée du microcontrôleur.
